**Europäisches Patentamt**

**European Patent Office**

**Office européen des brevets**

(19)

(11) Numéro de publication: **0 017 579**
**B1**

(12) # FASCICULE DE BREVET EUROPEEN

(45) Date de publication du fascicule du brevet:
07.09.83

(51) Int. Cl.³: **H 01 B 7/34,** H 01 B 3/44

(21) Numéro de dépôt: **80400431.5**

(22) Date de dépôt: **01.04.80**

(54) **Câble électrique à faible taux de nuisance, et ayant un bon comportement au feu.**

(30) Priorité 03.04.79 FR 7908368

(43) Date de publication de la demande:
15.10.80 Bulletin 80/21

(45) Mention de la délivrance du brevet:
07.09.83 Bulletin 83/36

(84) Etats contractants désignés:
**BE DE IT SE**

(56) Documents cités:
**FR-A-1 539 152**
**FR-A-2 307 350**
**FR-A-2 398 371**
**US-A-3 738 866**

(73) Titulaire: **THOMSON-BRANDT, 173, Boulevard Haussmann, F-75379 Paris Cedex 08 (FR)**

(72) Inventeur: **Guilhaumou, Jean-Marie, "THOMSON-CSF" SCPI - 173, bld Haussmann, F-75360 Paris Cedex 08 (FR)**
Inventeur: **Reumont, Paul, "THOMSON-CSF" SCPI - 173, bld Haussmann, F-75360 Paris Cedex 08 (FR)**

(74) Mandataire: **Phan, Chi Quy et al, THOMSON-CSF SCPI 173, Bld Haussmann, F-75379 Paris Cedex 08 (FR)**

Câble électrique à faible taux de nuisance, et ayant un bon comportement au feu

La présente invention concerne un câble électrique à faible taux de nuisance, c'est-à-dire ne donnant par pyrolyse qu'un faible dégagement de gaz et de fumées toxiques et corrosifs, et ayant un bon comportement au feu.

Les câbles électriques sont généralement constitués d'un assemblage de conducteurs métalliques munis d'un revêtement d'isolation électrique et de protection extérieure.

Les matières constitutives du revêtement isolant de ces conducteurs métalliques sont habituellement à base de polyéthylène réticulé, de polychlorure de vinyle ou de caoutchouc éthylène-propylène. Les matières constituant le revêtement de protection extérieure sont généralement à base de polychlorure de vinyle, de polychloroprène ou de polyéthylène chlorosulfoné.

Les câbles électriques ainsi constitués n'ont habituellement qu'une faible résistance au feu. En effet lorsqu'on les soumet au rayonnement d'un four électrique, selon un essai conforme à la norme française NF C 32.070 de Mai 1971 et additif n° 1 (essai n° 2), ces câbles sont détruits, non seulement dans leur partie placée dans le four mais également dans leur partie située à l'extérieur du four étant donné que le feu se propage progressivement sur tout le long du câble et le détruit entièrement.

Pour améliorer le comportement des câbles au feu, il est connu d'introduire, dans la matière constituant le revêtement isolant des conducteurs métalliques de ces câbles comme dans celles constituant le revêtement de protection extérieure, des produits ignifugeants tels que l'oxyde d'antimoine, le borate de zinc, l'hydroxyde d'aluminium, en combinaison ou non avec des produits halogénés, chlorés ou bromés tels que les paraffines chlorées, le décabromodiphényléther, ou des dérivés phosphatés, tel que le tricrésylphosphate.

Dans la publication US-A-3 738 866 est décrite une composition pour le revêtement de câble électrique à base de mélange de polyoléfine chlorée et de polyoléfine non chlorée, par exemple de polyéthylène et de polyéthylène chloré à 45% en poids de chlore ou de copolymère éthylène/acétate de vinyle à 30% d'acétate et de polyéthylène chloré à 45% en poids de chlore. Pour que ce revêtement présente une bonne résistance à la flamme, le taux de chlore de ce mélange doit être maintenu entre 20% et 35%.

Si on obtient dans ces câbles électriques une nette amélioration de leur comportement au feu, on observe cependant que l'adjonction de produits des types indiqués ci-dessus, conduit généralement à une augmentation de la production de fumées et de gaz toxiques et corrosifs lors de leur combustion, autrement dit un fort taux de nuisance. En particulier une augmentation du pourcentage d'halogène contenu dans les composés constituant le revêtement isolant des conducteurs métalliques, et le revêtement de protection extérieure de ces câbles, entraîne un dégagement important d'halogénures d'hydrogène, corps éminément toxiques et corrosifs.

Lorsqu'on utilise de tels câbles électriques dans des locaux recevant du public ou des endroits comportant des matériels sensibles à la corrosion, tels que les véhicules de chemin de fer souterrain, les installations sidérurgiques ou téléphoniques, les salles d'ordinateurs, etc. un dégagement abondant de fumées et gaz toxiques et corrosifs accroît nettement le risque de dommage envers les personnes et les biens.

La présente invention, ayant pour but d'éviter ces inconvénients, permet de réaliser un câble électrique comprenant des conducteurs métalliques munis au moins d'un revêtement à faible taux de nuisance c'est-à-dire ne dégageant que peu de fumées et de gaz toxiques et corrosifs et ayant un bon comportement au feu.

Selon l'invention, un câble électrique à faible dégagement de fumées et de gaz toxiques et corrosifs, ayant un bon comportement au feu, et dont les conducteurs métalliques sont pourvus de revêtement d'isolation électrique et de protection extérieure, est caractérisé en ce que les conducteurs métalliques sont pourvus d'au moins un revêtement constitué par une composition chimique ayant au moins une combinaison de copolymère éthylène/acétate de vinyle à taux d'acétate allant de 40% à 80% et de polyéthylène chloré à taux de chlore allant de 20% à 45% et dont la quantité totale de chlore en poids, pour 100 de polymères, est au plus égale à 15.

Pour mieux faire comprendre l'invention on décrit ci-après, à titre indicatif, un certain nombre d'exemples dont l'un concerne un câble électrique connu et les autres sont relatifs aux câbles conformes à l'invention.

Dans un câble électrique connu, pris comme exemple, le revêtement de ses conducteurs métalliques est constitué par une composition du type également connu, qui comprend des éléments suivants:

| | |
|---|---|
| — polyéthylène chlorosulfoné | 100 parties en poids |
| — noir de carbone | 15 parties en poids |
| — carbonate de calcium | 20 parties en poids |
| — talc | 30 parties en poids |
| — litharge | 20 parties en poids |
| — phtalate dibasique de plomb | 5 parties en poids |

| | |
|---|---|
| — paraffine | 7 parties en poids |
| — ditridécylphtalate | 35 parties en poids |
| — dibutyldithiocarbamate de Nickel | 1 parties en poids |
| — bismaléimide | 2 parties en poids |

Une telle composition a été extrudée et vulcanisée sur un conducteur métallique de section 10 mm 2 avec une épaisseur radiale de 2,3 mm.

Des essais ont été effectués sur le conducteur ainsi réalisé.

Dans l'essai de comportement au feu, l'opération est effectuée conformément à l'essai n° 2 de la norme NF C 32.070 + additif n° 1.

Pour l'essai de dégagement des fumées, l'opération est effectuée conformément à l'essai de la chambre NBS selon le projet de norme C 20.452 (Décembre 1975).

Pour le dosage des gaz toxiques et corrosifs dégagés par pyrolyse, l'essai est réalisé selon le projet de norme C 20.454 (Avril 1978).

En outre, une détermination de l'indice d'oxygène limite de cette composition est réalisée selon la norme NF T 51.071.

Les résultats suivants ont été obtenus:

| | |
|---|---|
| — Comportement au feu: | |
| (norme NF C 32.070) | |
| hauteur brulée au-dessus du four | 1 cm |
| — Opacité des fumées | |
| (projet NF C 20.452) | |
| densité optique maximum | 900 |
| $VOF_4$ | 500 |
| (vitesse d'opacité de fumée, 4 minutes après le départ de l'essai) | |
| — Gaz toxiques et corrosifs dégagés par pyrolyse: | |
| (projet de norme française C 20.454) | |
| quantité pour 10 cm de conducteur (mg): | |
| oxyde de carbone | 760 |
| gaz carbonique | 4895 |
| acide chlorhydrique | 970 |

L'indice d'oxygène de cette composition est de 32%.

Un câble électrique réalisé selon l'invention comprend des conducteurs métalliques pourvus au moins d'un revêtement constitué par une composition chimique dans laquelle entre au moins une combinaison de polymère éthylène/acétate de vinyle à taux d'acétate de vinyle allant de 40% à 80% et de polyéthylène chloré à taux de chlore allant de 20 à 45%. Cette composition contient en outre des charges, des plastifiants, des antioxydants, et des agents de vulcanisation de types connus. La quantité totale de chlore en poids dans ce composé chimique, pour 100 de polymères, est au plus égale à 15. Trois exemples de compositions pour revêtement de conducteur métallique de câbles conformes à l'invention sont donnés ci-après, dans lesquels les chiffres représentent les parties en poids des composants correspondants:

| | Exemples | | |
|---|---|---|---|
| | 1 | 2 | 3 |
| Copolymère éthylène/acétate de vinyle à 70% d'acétate | 75 | 70 | — |
| Copolymère éthylène/acétate de vinyle à 45% d'acétate | — | — | 80 |
| Polyéthylène chloré à 36% de chlore | 25 | 30 | 20 |
| Noir de carbone | 20 | 20 | — |
| Silice | 12 | 12 | — |
| Talc | 35 | 35 | — |
| Kaolin | — | — | 60 |
| Carbonate de calcium | — | — | 58 |
| Oxyde d'antimoine | 8 | 8 | — |
| Triméthyldihydroquinoléine polymérisée | 1 | 1 | 1,5 |
| Phtalate de ditridécycle | 10 | 15 | 5 |
| Sulfate tribasique de plomb | 10 | — | — |
| Stéarate de plomb | 2 | 2 | 2 |
| Phtalate de plomb | — | 5 | 5 |
| Vinylsilane | 1 | 1 | — |
| Triallylcyanurate | 1 | 0,5 | 1 |
| Péroxyde de 1,3 bis(t-butylisopropyl)benzéne à 40% | 7 | 7 | 6 |

Ces trois compositions ont été respectivement déposées et vulcanisées sur trois conducteurs métalliques de 10 mm$^2$ de section, l'épaisseur radiale de la couche étant de 2,3 mm.

Des essais identiques à ceux concernant le conductuer revêtu de composition chimique de type connu décrit plus haut, ont été effectués sur les trois conducteurs ainsi réalisés, et ont donnés des résultats suivant:

| | Exemples 1 | 2 | 3 |
|---|---|---|---|
| Indice d'oxygéne limite (%) (NF T 51.071) | 31 | 29 | 24 |
| Comportement au feu (NF C 32.070 essai n°2 hautuer brûlée au-dessus du four) (cm) | 2 | 2 | 5 |
| Opacité des fumées (projet NF 20.452) densité optique maximum | 453 | 447 | 210 |
| $VOF_4$ (Vitesse d'opacité de fumée, 4 minutes après le départ de l'essai) | 141 | 184 | 23 |
| Gaz nocifs dégagés par pyrolyse (projet C 20.454), quantité dégagée pour 10 cm de conducteur (mg): | | | |
| oxyde de carbone | 620 | 661 | 598 |
| gaz carbonique | 6594 | 6613 | 7140 |
| acide chlorhydrique | 103 | 103 | 53 |

Ces résultats montrent que les câbles électriques revêtus de compositions réalisées selon l'invention ont non seulement un comportement au feu aussi bon que celui du câble revêtu d'une composition isolante choisie parmi les meilleures compositions isolantes classiques, mais également des caractéristiques nettement meilleures à celles des câbles ayant pour revêtement, la composition chimique connue, en ce qui concerne le dégagement de fumées et de gaz toxiques et corrosifs.

En effet la production de fumée ne représente pour les câbles électriques réalisés selon l'invention qu'une quantité inférieure à la moitié de celle d'un câble électrique classique et notamment le dégagement des gaz toxiques et corrosifs n'atteint pour les câbles électriques de l'invention qu'une quantité inférieure au neuvième de celle du dégagement produit par un câble électrique classique.

Les câbles électriques réalisés selon l'invention peuvent être ainsi utilisés avec une sécurité nettement améliorée pour les personnes, et un faible risque de dommage pour le matériel dans des installations industrielles, des salles d'ordinateurs, des réseaux de transport ou de centres d'exploitation souterrains etc.

## Revendications

1. Câble électrique, à faible dégagement de fumées, de gaz toxiques et corrosifs, ayant un bon comportement au feu, et dont les conducteurs métalliques sont pourvus de revêtements d'isolation électrique et de protection extérieure dont au moins un est constitué par une composition chimique comprenant du copolymère éthylène/acétate de vinyle et du polyéthylène chloré, caractérisé en ce que ladite composition chimique comprend au moins une combinaison de copolymère éthylène/acétate de vinyle à taux d'acétate allant de 40% à 80% et de polyéthylène chloré à taux de chlore allant de 20% à 45% et dont la quantité totale de chlore en poids, pour 100 de polymères, est au plus égale à 15.

2. Câble électrique selon la revendication 1, caractérisé en ce que la composition chimique comprend 75 parties en poids de copolymère éthylène/acétate de vinyle à 70% d'acétate, 25 parties en poids de polyéthylène chloré à 36% de chlore, 20 parties en poids de noir de carbone, 12 parties en poids de silice, 35 parties en poids de talc, 8 parties en poids d'oxyde d'antimoine, 1 partie en poids de triméthyldihydroquinoléine polymérisée, 10 parties en poids de phtalate de ditridécyle, 10 parties en poids de sulfate tribasique de plomb, 2 parties en poids de stéarate de plomb, 1 partie en poids de vinylsilane, 1 partie en poids de triallylcyanurate, 7 parties en poids de péroxyde de 1,3bis(t-butylisopropyl)benzène à 40%.

3. Câble électrique selon la revendication 1, caractérisé en ce que la composition chimique comprend 70 parties en poids de copolymère éthylène/acétate de vinyle à 70% d'acétate, 30 parties en poids de polyéthylène chloré à 36% de chlore, 20 parties en poids de noir de carbone, 12 parties en poids de silice, 35 parties en poids de talc, 8 parties en poids d'oxyde d'antimoine, 1 partie en de poids triméthyldihydroquinoléine polymérisée, 15 parties en poids de phtalate de ditridécyle, 2 parties en poids de stéarate de plomb, 5 parties en poids de phtalate de plomb, 1 partie en poids de vinylsilane, 0,5 partie en poids de triallylcyanurate, 7 parties en poids de péroxyde de 1,3 bis (t-butylisopropyl) benzène à 40%.

5

4. Câble électrique selon la revendication 1, caractérisé en ce que la composition chimique comprend 80 parties en poids de copolymère éthylène/acétate de vinyle à 45% d'acétate, 20 parties en poids de polyéthylène chloré à 36% de chlore, 60 parties en poids de kaolin, 58 parties en poids de carbonate de calcium, 1,5 partie en poids de triméthyldihydroquinoléine polymérisée, 5 parties en poids de phtalate de ditridécyle, 2 parties en poids de stéarate de plomb, 5 parties en poids de phtalate de plomb, 1 partie en poids de triallylcyanurate, 6 parties en poids de péroxyde de 1,3 bis (t-butylisopropyl) benzène à 40%.

**Patentansprüche**

1. Elektrisches Kabel mit geringer Entwicklung von Rauch, giftigen und korrodierenden Gasen, mit gutem Brandverhalten, dessen metallische Leiter mit Beschichtungen zur elektrischen Isolierung und zum äußeren Schutz versehen sind, von denen mindestens eine aus einer chemischen Zusammensetzung besteht, welche Ethylen-Vinylacetat-Copolymer und chloriertes Polyethylen enthält, dadurch gekennzeichnet, daß die chemische Stoffzusammensetzung mindestens eine Kombination von Ethylen-Vinylacetat-Copolymer mit einem Acetatgehalt von 40 bis 80% und von chloriertem Polyethylen mit einem Chlorgehalt von 20 bis 45% aufweist, wobei die Gesamtgewichtsmenge Chlor für 100 Gewichtsteile Polymeren höchstens gleich 15 ist.

2. Elektrisches Kabel nach Anspruch 1, dadurch gekennzeichnet, daß die chemische Stoffzusammensetzung 75 Gewichtsteile Ethylen-Vinylacetat-Copolymer mit 70% Acetat, 25 Gewichtsteile chloriertes Polyethylen mit 36% Chlor, 20 Gewichtsteile Ruß, 12 Gewichtsteile Siliciumdioxid, 35 Gewichtsteile Talkum, 8 Gewichtsteile Antimonoxid, 1 Gewichtsteil polymerisiertes Trimethyldihydroquinolein, 10 Gewichtsteile Ditridecylphthalat, 10 Gewichtsteile dreibasisches Bleisulfat, 2 Gewichtsteile Bleistearat, 1 Gewichtsteil Vinylsilan, 1 Gewichtsteil Triallylcyanurat, 7 Gewichtsteile 40%iges Peroxyd von 1,3 Bis-(t-butylisopropyl)-benzol enthält.

3. Elektrisches Kabel nach Anspruch 1, dadurch gekennzeichnet, daß die chemische Stoffzusammensetzung 70 Gewichtsteile Ethylen-Vinylacetat-Copolymer mit 70% Acetat, 30 Gewichtsteile chloriertes Polyethylen mit 36% Chlor, 20 Gewichtsteile Ruß, 12 Gewichtsteile Siliciumdioxid, 35 Gewichtsteile Talkum, 8 Gewichtsteile Antimonoxid, 1 Gewichtsteil polymerisiertes Trimethyldihydroquinolein, 15 Gewichtsteile Ditridecylphthalat, 2 Gewichtsteile Bleistearat, 5 Gewichtsteile Bleiphthalat, 1 Gewichtsteil Vinylsilan, 0,5 Gewichtsteile Triallylcyanurat, 7 Gewichtsteile 40%iges Peroxid von 1,3-Bis-(t-butylisopropyl)-benzol enthält.

4. Elektrisches Kabel nach Anspruch 1, dadurch gekennzeichnet, daß die chemische Stoffzusammensetzung 80 Gewichtsteile Ethylen-Vinylacetat-Copolymer mit 45% Acetat, 20 Gewichtsteile chloriertes Polyethylen mit 36% Chlor, 60 Gewichtsteile Kaolin, 58 Gewichtsteile Calciumcarbonat, 1,5 Gewichtsteile polymerisiertes Trimethyldihydroquinolein, 5 Gewichtsteile Ditridecylphthalat, 2 Gewichtsteile Bleistearat, 5 Gewichtsteile Bleiphthalat, 1 Gewichtsteil Triallylcyanurat, 6 Gewichtsteile 40%iges Peroxid von 1,3-Bis-(t-butylisopropyl)-benzol enthält.

**Claims**

1. An electrical cable with little development of smoke, of toxic and corrosive gases and having good behaviour in fire, the metallic conductors of said cable being provided with coatings for electrical insulation and for external protection, at least one of said coatings consisting of a chemical composition that contains ethylene-vinylacetate copolymer and chlorinated polyethylene, characterized in that the chemical composition comprises at least a combination of ethylene-vinylacetate copolymer having an acetate content of 40 to 80% and of chlorinated polyethylene having a chlorine content of 20 to 45%, the total quantity by weight of chlorine per 100 parts by weight of polymer not exceeding 15.

2. An electrical cable as claimed in claim 1, characterized in that the chemical composition comprises 75 parts by weight of ethylene-vinylacetate copolymer including 70% of acetate, 25 parts by weight of chlorinated polyethylene including 36% of chlorine, 20 parts by weight of carbon black, 12 parts by weight of silicon dioxide, 35 parts by weight of talcum, 8 parts by weight of antimony oxide, 1 part by weight of polymerized trimethyldihydroquinoline, 10 parts by weight of ditridecylphthalate, 10 parts by weight of tribasic lead (II) sulfate, 2 parts by weight of lead stearate, 1 part by weight of vinyl silane, 1 part by weight of triallyl cyanurate, 7 parts by weight of 40% peroxide of 1,3-bis(t-butylisopropyl)benzene.

3. An electrical cable as claimed in claim 1, characterized in that the chemical composition comprises 70 parts by weight of ethylene-vinylacetate copolymer including 70% of acetate, 30 parts by weight of chlorinated polyethylene including 36% of chlorine, 20 parts by weight of carbon black, 12 parts by weight of silicon dioxide, 35 parts by weight of talcum, 8 parts by weight of antimony oxide, 1 part by weight of polymerized trimethyldihydroquinoline, 15 parts by weight of ditridecylphthalate, 2 parts by weight of lead stearate, 5 parts by weight of lead phthalate, 1 part by weight of vinyl silane, 0,5 parts by weight of triallyl cyanurate, 7 parts by weight of 40% peroxide of 1,3-bis(t-butylisopropyl)benzene.

4. An electrical cable as claimed in claim 1, characterized in that the chemical composition comprises 80 parts by weight of ethylene-vinylacetate copolymer including 45% of acetate, 20 parts by weight of chlorinated polyethylene including 36% of chlorine, 60 parts by weight of kaolin, 58 parts by weight of calcium carbonate, 1,5 parts by weight of polymerized trimethyldihydroquinoline, 5 parts by weight of ditridecylphthalate, 2 parts by weight of lead stearate, 5 parts by weight of lead phthalate, 1 part by weight of triallyl cyanurate, 6 parts by weight of 40% peroxide of 1,3-bis(t-butylisopropyl)benzene.